# EUROPEAN PATENT APPLICATION

(11) **EP 3 914 035 A1**
(43) Date of publication of application: **24.11.2021**
(21) Application number: 21174791.0
(22) Date of filing: 19.05.2021
(51) Int. Cl.: H04W 76/16, H04W 92/02, H04L 12/66

(54) **WIRELESS NETWORK BRIDGING METHOD AND WIRELESS NETWORK TRANSMISSION DEVICE USING THE SAME**

(30) Priority: 20.05.2020 TW 109116619
(71) Applicant: Arcadyan Technology Corporation, Hsinchu City 30071 (TW)
(72) Inventor: HUANG, Kuo-Shu, 302 Hsinchu County (TW); HSIEH, Tsung-Hsien, 300 Hsinchu City (TW); WANG, Wen-Chieh, 300 Hsinchu City (TW); TSENG, Wei-Ru, 300 Hsinchu City (TW)
(74) Representative: dompatent von Kreisler Selting Werner - Partnerschaft von Patent- und Rechtsanwälten mbB

(57) **Abstract**

A wireless network bridging method and a wireless network transmission device using the same are provided. The wireless network bridging method includes the following steps. A first wireless network transmission device sets a downlink channel and at least one connection channel connected to at least one user equipment. A second wireless network transmission device sets an uplink channel. The second wireless network transmission device sets a downlink channel according to a channel information of the first wireless network transmission device. The downlink channel and the uplink channel of the second wireless network transmission device are different. The second wireless network transmission device sets at least one connection channel connected to at least one user equipment according to the channel information of the first wireless network transmission device. The connection channels of the second wireless network transmission device and the first wireless network transmission device are different.

## Description

### TECHNICAL FIELD

The disclosure relates in general to a network setup method and an electric device using the same, and more particularly to a wireless network bridging method and a wireless network transmission device using the same.

### BACKGROUND

With the advancement of network technology, various wireless network electronic devices have been developed. A daisy chain is a multilayer bridging technology that extends the coverage of a wireless network. In the daisy chain topology, multiple wireless networks are connected in series transmission device, so that the wireless signal is extended to every corner.

However, in the wireless network transmission device, the transmission performance of the wireless network is limited by the half-duplex communication method of the wireless network, so that the transmission performance is exponentially halved as the bridge level increases. Therefore, researchers are committed to developing a new wireless network bridging technology to improve the problem that the transmission performance decreases as the bridging class increases.

### SUMMARY

The disclosure is directed to a wireless network bridging method and a wireless network transmission device using the same. Different 5G transceiver units and different channels are used alternately to overcome the problem of halving transmission performance, and effectively avoid the problem of signal interference.

According to one embodiment, a wireless network bridging method is provided. The wireless network bridging method includes the following steps. A first wireless network transmission device sets a downlink channel of the first wireless network transmission device and sets at least one connection channel of the first wireless network transmission device connected to at least one user equipment. A second wireless network transmission device scans the first wireless network transmission device. A second wireless network transmission device sets an uplink channel of the second wireless network transmission device. The first wireless network transmission device transmits a channel information of the first wireless network transmission device to the second wireless network transmission device. The second wireless network transmission device sets a downlink channel of the second wireless network transmission device according to the channel information of the first wireless network transmission device. The downlink channel and the uplink channel of the second wireless network transmission device are different. The second wireless network transmission device sets at least one connection channel of the second wireless network transmission device connected to at least one user equipment according to the channel information of the first wireless network transmission device. The connection channel of the second wireless network transmission device and the connection channel of the first wireless network transmission device are different.

According to another embodiment, a wireless network bridging method is provided. The wireless network bridging method includes the following steps. A first wireless network transmission device sets a main downlink channel and a secondary downlink channel of the first wireless network transmission device. A second wireless network transmission device sets a main uplink channel and a secondary uplink channel of the second wireless network transmission device. The second wireless network transmission device sets a main downlink channel and a secondary downlink channel of the second wireless network transmission device. The main downlink channel and the main uplink channel of the second wireless network transmission device are different.

According to an alternative embodiment, a wireless network transmission device is provided. The wireless network transmission device includes at least one 5G transceiver unit and at least one 2.4G transceiver unit. One of the at least one 5G transceiver unit and the at least one 2.4G transceiver unit provides an uplink channel. Another one of the at least one 5G transceiver unit and the at least one 2.4G transceiver unit provides a downlink channel. The downlink channel is different from the uplink channel.

### BRIEF DESCRIPTION OF THE DRAWINGS

FIG. 1 shows a schematic diagram of a wireless network bridge system according to the first embodiment.
FIG. 2 shows a flowchart of a wireless network bridging method according to an embodiment.
FIG. 3 shows a schematic diagram of a wireless network bridge system according to a second embodiment.
FIG. 4 shows a schematic diagram of a wireless network bridge system according to a third embodiment.
FIG. 5 shows a flowchart of a wireless network bridging method according to an embodiment.
FIG. 6 shows a schematic diagram of a wireless network bridge system according to a fourth embodiment.
FIG. 7 shows a schematic diagram of a wireless network bridge system according to a fifth embodiment.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

### First Embodiment

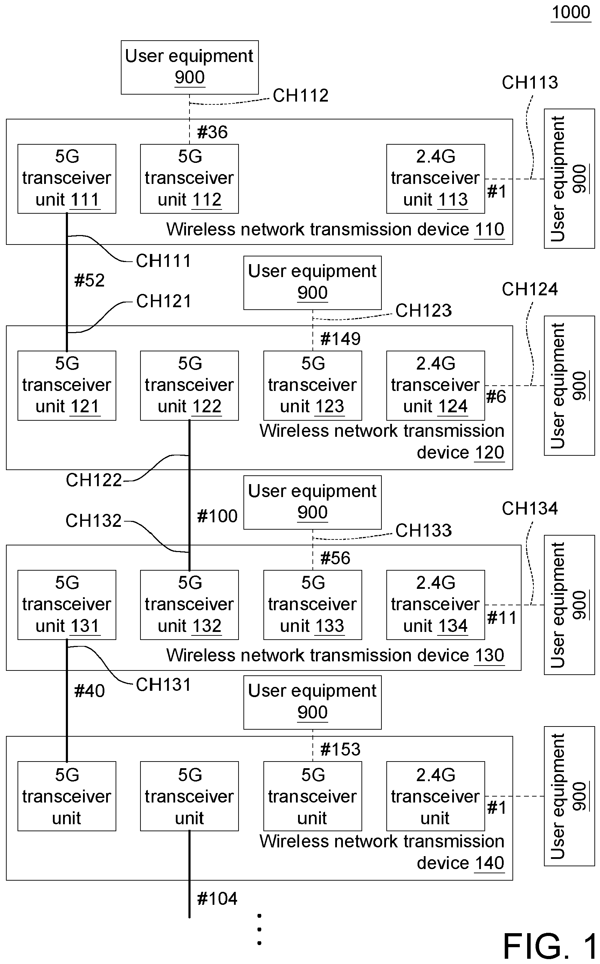

Please refer to FIG. 1, which shows a schematic diagram of a wireless network bridge system 1000 according to the first embodiment. The wireless network bridge system 1000 of the first embodiment uses a hardware architecture to implement the technology of the present invention.

The wireless network bridge system 1000 includes a plurality of wireless network transmission devices 110, 120, 130, 140, etc. The wireless network transmission device 110 is, for example, a gateway, the wireless network transmission devices 120, 130, 140, ... are, for example, signal extenders. The wireless network transmission device 110 includes two 5G transceiver units 111, 112 and one 2.4G transceiver unit 113. The wireless network transmission device 120 includes three 5G transceiver units 121, 122, 123 and one 2.4G transceiver unit 124. The wireless network transmission device 130 includes three 5G transceiver units 131, 132, 133 and one 2.4G transceiver unit 134.

In the first embodiment, a downlink channel CH122 of the wireless network transmission device 120 is different from an uplink channel CH121 of the wireless network transmission device 120. That is to say, the wireless network transmission device 120 uses the 5G transceiver unit 121 to communicate with the previous wireless network transmission device 110, and uses the 5G transceiver unit 122 to communicate with the next wireless network transmission device 130, without the problem of halving the transmission performance.

Similarly, a downlink channel CH131 of the wireless network transmission device 130 is different from an uplink channel CH132 of the wireless network transmission device 130. The wireless network transmission device 130 uses the 5G transceiver unit 132 to communicate with the previous wireless network transmission device 120, and uses the 5G transceiver unit 131 to communicate with the next wireless network transmission device 140, without the problem of halving the transmission performance.

Similarly, the wireless network transmission device 140 also uses different uplink channel and downlink channel.

In addition, two connection channels CH123, CH124 of the wireless network transmission device 120 connected to the user equipment 900 are different from two connection channels CH112, CH113 of the wireless network transmission device 110 connected to the user equipment 900, so as to avoid the problem of signal interference.

For example, in 5G technology, the 25 5G channels that can be used include No. 36 channel, No. 40 channel, No. 44 channel, No. 48 channel, No. 52 channel, No. 56 channel, No. 60 channel, No. 64 channel, No. 100 channel, No. 104 channel, No. 108 channel, No. 112 channel, No. 116 channel, No. 120 channel, No. 124 channel, No. 128 channel, No. 132 channel, No. 136 channel, No. 140 channel, No. 144 channel, No. 149 channel, No. 153 channel, No. 157 channel, No. 161 channel, and No. 165 channel. The No. 36 channel, the NO. 40 channel, the No. 44 channel and the No. 48 channel belong to a first frequency band. The No. 52 channel, the No. 56 channel, the No. 60 channel and the No. 64 channel belong to a second frequency band. The No. 100 channel, the No. 104 channel, the No. 108 channel, the No. 112 channel, the No. 116 channel, the No. 120 channel, the No. 124 channel, the No. 128 channel, the No. 132 channel, the No. 136 channel, the No. 140 channel and the No. 144 channel belong to a third frequency band. The No. 149 channel, the No. 153 channel, the No. 157 channel, the No. 161 channel and the No. 165 channel belong to a fourth frequency band.

In the wireless network transmission device 110, one of 25 5G channels, such as the No. 36 channel, can be selected for the connection channel CH112 of the 5G transceiver unit 112.

In the wireless network transmission device 120, one of the remaining 24 5G channels, such as the No. 149 channel is selected for the connection channel CH123 of the 5G transceiver unit 123, so as to avoid the interference with the connection channel CH112 of the 5G transceiver unit 112 of the wireless network transmission device 110.

In the wireless network transmission device 130, one of the remaining 5G channels, such as the No. 56 channel, is selected for the connection channel CH133 of the 5G transceiver unit 133, so as to avoid the interference with the channel connection channel CH123 of the 5G transceiver unit 123 of the wireless network transmission device 120.

In 2.4G technology, 11 2.4G channels that can be used include No. 1 to No. 11 channels. The No. 1 channel, the No. 6 channel and the No. 11 channel do not interfere with each other.

In the wireless network transmission device 110, one of the three 2.4G channels that do not interfere with each other, such as the No. 1 channel, is selected for the connection channel CH113 of the 2.4G transceiver unit 113.

In the wireless network transmission device 120, one of the remaining two 2.4G channels that do not interfere with each other, such as the No. 6 channel, is selected for the connection channel CH124 of the 2.4G transceiver unit 124, so as to avoid the interference with the connection channel CH113 of the 2.4G transceiver unit 113 of the wireless network transmission device 110.

In the wireless network transmission device 130, one of the remaining 2.4G channels, such as the No. 11 channel, is selected for the connection channel CH134 of the 2.4G transceiver unit 134, so as to avoid the interference with the connection channel CH124 of the 2.4G transceiver unit 124 of the wireless network transmission device 120.

Through the above hardware architecture, in the wireless network bridge system 1000, the wireless network transmission devices 110, 120, 130, 140, etc. can be connected without halving the transmission performance and any interference.

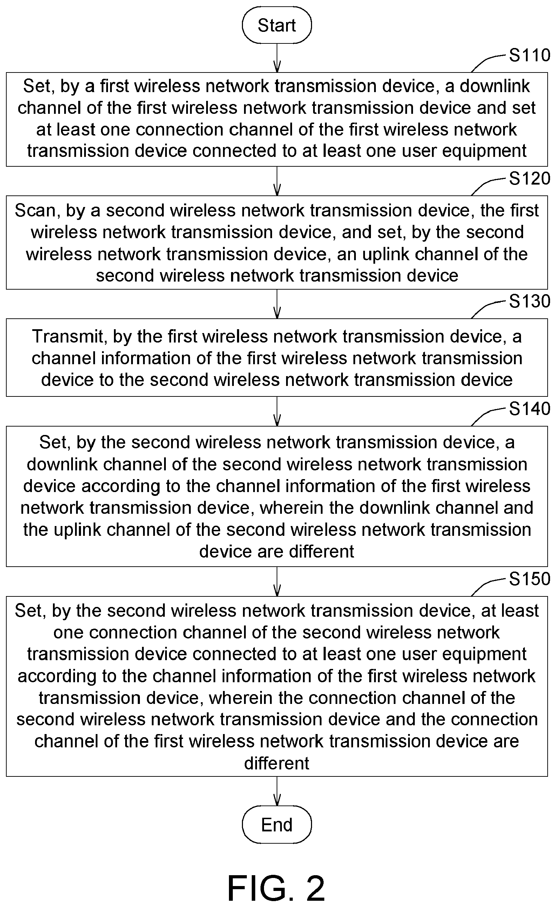

Please refer to FIG. 2, which shows a flowchart of a wireless network bridging method according to an embodiment. The following is an explanation with the wireless network bridge system 1000 in FIG. 1. In step S110, the wireless network transmission device 110 sets the downlink channel CH111, and sets the connection channels CH112, CH113 connected to the user equipment 900.

Next, in step S120, the wireless network transmission device 120 scans the wireless network transmission device 110, and sets the uplink channel CH121. The uplink channel CH121 of the wireless network transmission device 120 is the same as the downlink channel CH111 of the wireless network transmission device 110.

Then, in step S130, the wireless network transmission device 110 transmits the channel information to the wireless network transmission device 120, for example, to inform that the wireless network transmission device 110 uses the connection channels CH112, CH113.

Next, in step S140, the wireless network transmission device 120 sets the downlink channel CH122 of the wireless network transmission device 120 according to the channel information of the wireless network transmission device 110. The downlink channel CH122 of the wireless network transmission device 120 is different from the uplink channel CH121 of the wireless network transmission device 120. For example, the uplink channel CH121 and the downlink channel CH122 are provided by the 5G transceiver unit 121 and the 5G transceiver unit 122 which are different and use different 5G channels.

Then, in step S150, the wireless network transmission device 120 sets the connection channels CH123, CH124 connected to the user equipment 900 according to the channel information of the wireless network transmission device 110. The connection channels CH123, CH124 of the wireless network transmission device 120 are different from the connection channels CH112, CH113 of the wireless network transmission device 110. For example, the No. 36 channel and the No. 1 channel are respectively used for the connection channels CH112 and CH113 of the wireless network transmission device 110, and the No. 149 channel and the No. 6 channel are respectively used for the connection channels CH123 and CH124 of the wireless network transmission device 120.

The above steps S140 and S150 can be exchanged in order.

In similar way, the wireless network transmission device 130 can configure the uplink channel CH132, the downlink channel CH131, and the connection channels CH133, CH134 through the above wireless network bridging method.

Through the above-mentioned wireless network bridging method, the wireless network transmission devices 110, 120, 130, 140, etc. adopt interlaced frequency bands/channels for serial connection, as such the problem of halving the transmission performance and the problem of signal interference can be avoided.

### Second embodiment

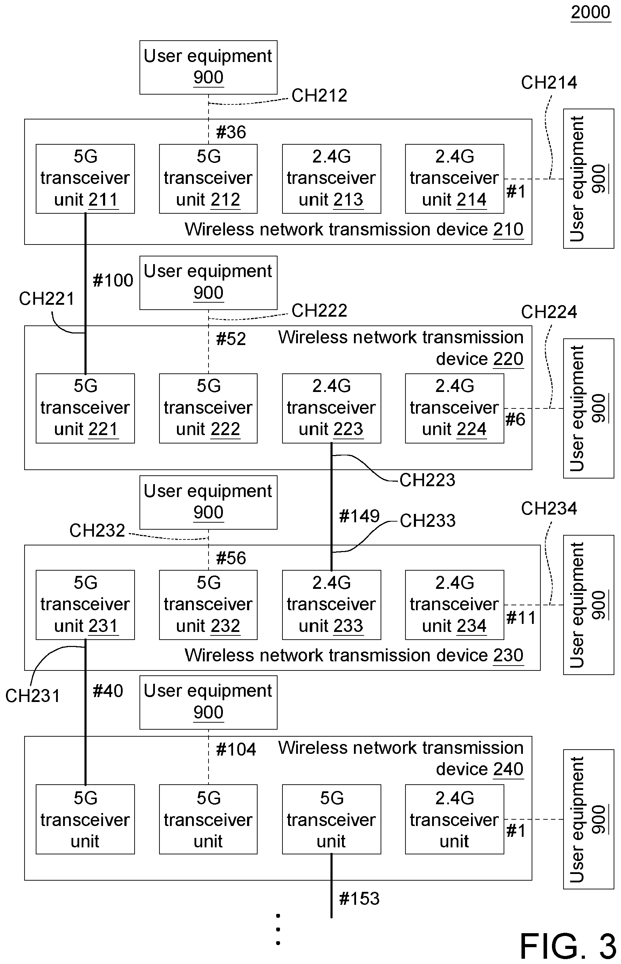

Please refer to FIG. 3, which shows a schematic diagram of a wireless network bridge system 2000 according to a second embodiment. The wireless network bridge system 2000 of the second embodiment uses a hardware architecture to implement the technology of the present invention.

The wireless network bridge system 2000 includes a plurality of wireless network transmission devices 210, 220, 230, 240, etc. The wireless network transmission device 210 is, for example, a gateway, wireless network transmission device 220, 230, 240, etc. are, for example, signal extenders. The wireless network transmission device 210 includes two 5G transceiver units 211, 212 and two 2.4G transceiver units 213, 214. The wireless network transmission device 220 includes two 5G transceiver units 221, 222 and two 2.4G transceiver units 223, 224. The wireless network transmission device 230 includes two 5G transceiver units 231, 232 and two 2.4G transceiver units 233, 234.

In the second embodiment, the downlink channel CH223 of the wireless network transmission device 220 is different from the uplink channel CH221 of the wireless network transmission device 220. The wireless network transmission device 220 can use the 5G transceiver unit 221 to communicate with the wireless network transmission device 210, and use the 2.4G transceiver unit 223 to communicate with the wireless network transmission device 230 without the problem of halving the transmission performance

Similarly, the downlink channel CH231 of the wireless network transmission device 230 is different from the uplink channel CH233 of the wireless network transmission device 230. The wireless network transmission device 230 can use the 2.4G transceiver unit 233 to communicate with the wireless network transmission device 220, and use the 5G transceiver unit 231 to communicate with the wireless network transmission device 240, without the problem of halving the transmission performance.

Similarly, the wireless network transmission device 240, etc. also uses different uplink channel and downlink channel.

In addition, the connection channels CH222, CH224 of the wireless network transmission device 220 connected to the user equipment 900 are different from the connection channels CH212, CH214 of the wireless network transmission device 210 connected to the user equipment 900, so as to avoid the problem of signal interference.

In the wireless network transmission device 210, one of 25 5G channels, such as the No. 36 channel, can be selected for the connection channel CH212 of the 5G transceiver unit 212.

In the wireless network transmission device 220, one of the remaining 24 5G channels, such as the No. 52 channel, is selected for the connection channel CH222 of the 5G transceiver unit 222, so as to avoid the interference with the connection channel CH222 of the 5G transceiver unit 212 of the wireless network transmission device 210.

In the wireless network transmission device 230, one of the remaining 5G channels, such as the No. 56 channel, is selected for the connection channel CH232 of the 5G transceiver unit 232 to avoid the interference with the connection channel CH222 of the 5G transceiver unit 222 of the wireless network transmission device 220.

In the wireless network transmission device 210, one of three 2.4G channels that do not interfere with each other, such as the No. 1 channel, is selected for the connection channel CH214 of the 2.4G transceiver unit 214.

In the wireless network transmission device 220, one of the remaining two 2.4G channels that do not interfere with each other, such as the No. 6 channel, is selected for the connection channel CH224 of the 2.4G transceiver unit 224, so as to avoid the interference with the connection channel CH214 of 2.4G transceiver unit 214 of the wireless network transmission device 210.

In the wireless network transmission device 230, one of the remaining 2.4G channels, such as the No. 11 channel, is selected for the connection channel CH234 of the 2.4G transceiver unit 234, so as to avoid the interference with the connection channel CH224 of the 2.4G transceiver unit of the wireless network transmission device 220.

Through the above hardware architecture, in the wireless network bridge system 2000, the wireless network transmission devices 210, 220, 230, 240, etc. are connected in series without the problem of halving the transmission performance and the problem of signal interference.

Similarly, the wireless network bridge system 2000 of the second embodiment may also be configured through the wireless network bridging method of FIG. 2, which will not be repeated here.

Through the above design, the wireless network transmission devices 210, 220, 230, 240, etc. adopt interlaced frequency band/channel for serial connection, the problem of halving the transmission performance and the problem of signal interference can be avoided.

### Third embodiment

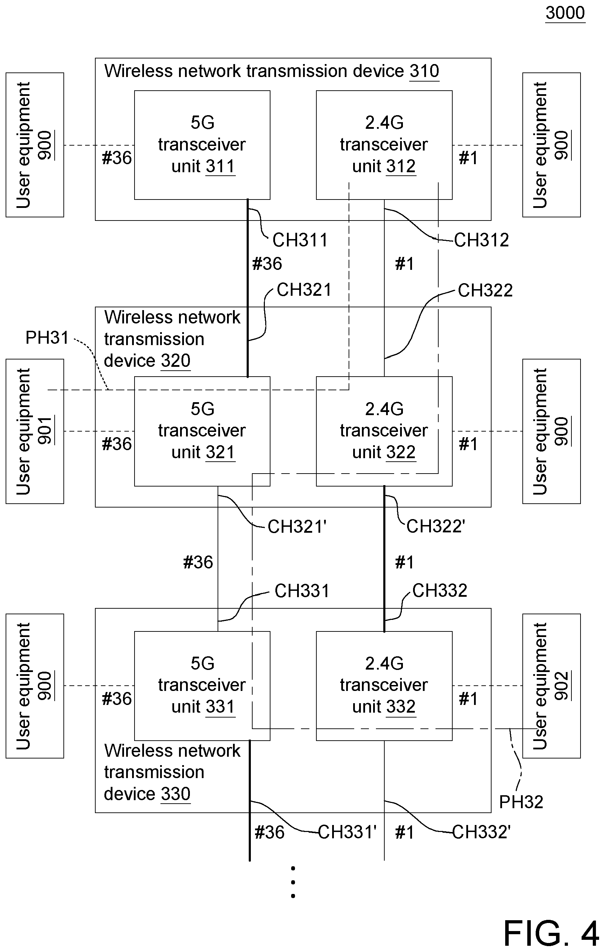

Please refer to FIG. 4, which shows a schematic diagram of a wireless network bridge system 3000 according to a third embodiment. The wireless network bridge system 3000 of the third embodiment uses a software architecture to implement the technology of the present invention.

The wireless network bridge system 3000 includes a plurality of wireless network transmission devices 310, 320, 330, etc. The wireless network transmission device 310 is, for example, a gateway, and the wireless network transmission devices 320, 330, etc. are, for example, signal extenders. The wireless network transmission device 310 includes one 5G transceiver unit 311 and one 2.4G transceiver unit 312. The wireless network transmission device 320 includes one 5G transceiver unit 321 and one 2.4G transceiver unit 322. The wireless network transmission device 330 includes one 5G transceiver unit 331 and one 2.4G transceiver unit 332.

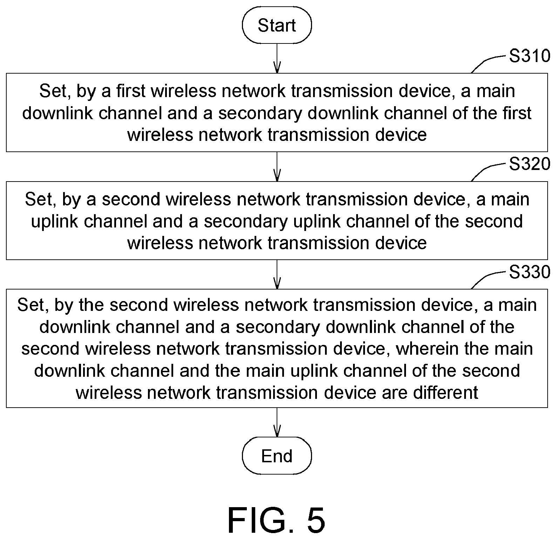

Please refer to FIG. 5, which shows a flowchart of a wireless network bridging method according to an embodiment. In the third embodiment, through the design of the primary channel and the secondary channel, the packet can be transferred to another transceiver unit without the problem of halving the transmission performance. In step S310, the wireless network transmission device 310 sets a main downlink channel CH311 and a secondary downlink channel CH312.

In step S320, the wireless network transmission device 320 sets a main uplink channel CH321 and a secondary uplink channel CH322.

In step S330, the wireless network transmission device 320 sets a main downlink channel CH322' and a secondary downlink channel CH321'. The main downlink channel CH322' of the wireless network transmission device 320 is different from the main uplink channel CH321 of the wireless network transmission device 320. In other words, the wireless network transmission device 320 mainly uses the 5G transceiver unit 321 to communicate with the previous wireless network transmission device 310, and mainly uses the 2.4G transceiver unit 322 to communicate with the next wireless network transmission device 330, without halving the transmission performance.

Similarly, the wireless network transmission device 330 sets a main uplink channel CH332, a secondary uplink channel CH331, a main downlink channel CH331' and a secondary downlink channel CH332'. The main downlink channel CH331' of the wireless network transmission device 330 is different from the main uplink channel CH332 of the wireless network transmission device 330. In other words, the wireless network transmission device 330 mainly uses 2 2.4G transceiver unit 332 to communicate with the previous wireless network transmission device 320, and mainly uses the 5G transceiver unit 331 to communicate with a next wireless network transmission device (not shown) without halving transmission performance.

Please refer to FIG. 4, the user equipment 901 can transmit a unicast packet along a path PH31. In other words, the 5G transceiver unit 321 of the wireless network transmission device 320 transfers the unicast packet to the 2.4G transceiver unit 322 of the wireless network transmission device 320 to upload it to the previous wireless network transmission device 310 through the secondary uplink channel CH322 of the wireless network transmission device 320. In this way, the 5G transceiver unit 321 is responsible for receiving the unicast packet from the user equipment 901 and the 2.4G transceiver unit 322 is responsible for upwardly transmitting the unicast packet upward, so as to effectively improve the problem of halving transmission performance.

The user equipment 902 can transmit the unicast packet along the path PH32. In other words, the 2.4G transceiver unit 332 of the wireless network transmission device 330 transfers the unicast packet to the 5G transceiver unit 331 of the wireless network transmission device 330 to upload it to the previous wireless network transmission device 320 through the secondary uplink channel CH331 of the wireless network transmission device 330. In this way, the 2.4G transceiver unit 332 is responsible for receiving the unicast packet from the user equipment 902, and the 5G transceiver unit 331 is responsible for upwardly transmitting the unicast packet, so as to effectively improve the problem of halving transmission performance. The 5G transceiver unit 321 of the wireless network transmission device 320 then transfers the unicast packet to the 2.4G transceiver unit 322 of the wireless network transmission device 320 to upload it to the previous wireless network transmission device 310 through the secondary uplink channel CH322 of the wireless network transmission device 320. In this way, the 5G transceiver unit 321 is responsible for receiving the unicast packet from user equipment 902, and the 2.4G transceiver unit 322 is responsible for upwardly transmitting the unicast packet, so as to effectively improve the problem of halving transmission performance.

### Fourth embodiment

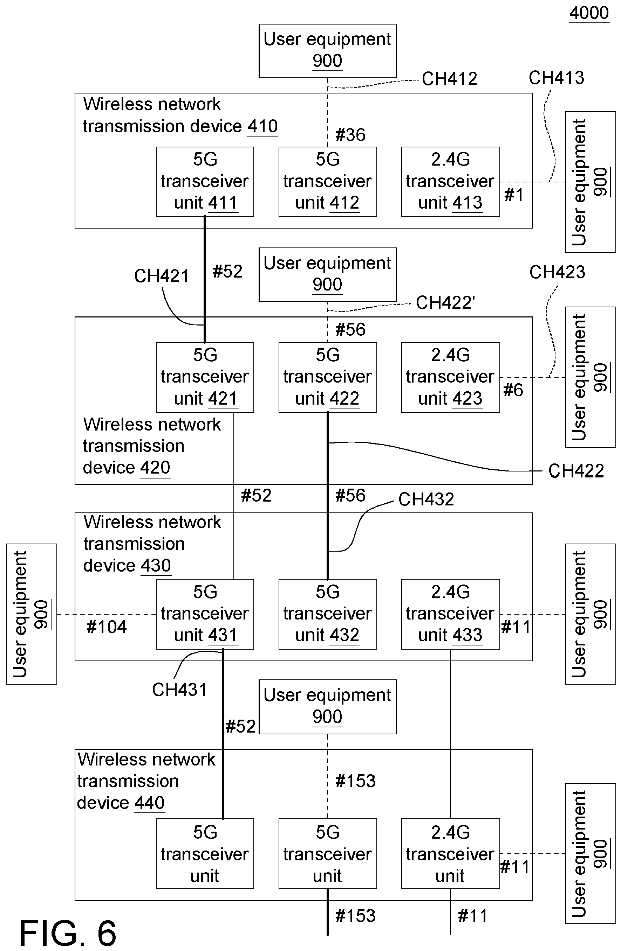

Please refer to FIG. 6, which shows a schematic diagram of a wireless network bridge system 4000 according to a fourth embodiment. The wireless network bridge system 4000 of the fourth embodiment adopts both the hardware architecture and the software architecture to implement the technology of the present invention.

The wireless network bridge system 4000 includes a plurality of wireless network transmission devices 410, 420, 430, 440, etc. The wireless network transmission device 410 is, for example, a gateway, the wireless network transmission devices 420, 430, 440, etc. are, for example, signal extenders. The wireless network transmission device 410 includes two 5G transceiver units 411, 412 and one 2.4G transceiver unit 413. The wireless network transmission device 420 includes two 5G transceiver units 421, 422 and one 2.4G transceiver unit 423. The wireless network transmission device 430 includes two 5G transceiver units 431, 432 and one 2.4G transceiver unit 433.

In the fourth embodiment, the main downlink channel CH422 of the wireless network transmission device 420 is different from the main uplink channel CH421 of the wireless network transmission device 420. In other words, the wireless network transmission device 420 mainly uses the 5G transceiver unit 421 to communicate with the previous wireless network transmission device 410, and mainly uses the 5G transceiver unit 422 to communicate with the next wireless network transmission device 430, without the problem of halving the transmission performance.

Similarly, the main downlink channel CH431 of the wireless network transmission device 430 is different from the main uplink channel CH432 of the wireless network transmission device 430. The wireless network transmission device 430 mainly uses the 5G transceiver unit 432 to communicate with the previous wireless network transmission device 420, and mainly uses the 5G transceiver unit 431 to communicate with the next wireless network transmission device 440, without the problem of halving the transmission performance.

Similarly, the wireless network transmission device 440 also uses different uplink channel and downlink channel.

In addition, the connection channels CH422', CH423 of the wireless network transmission device 420 connected to the user equipment 900 are different from the connection channels CH412, CH413 of the wireless network transmission device 410 connected to the user equipment 900, in order to avoid the signal interference problem.

Furthermore, in the fourth embodiment, the design of the primary channel and the secondary channel allows the packet to be transferred to another transceiver unit without the problem of halving the transmission performance.

### Fifth embodiment

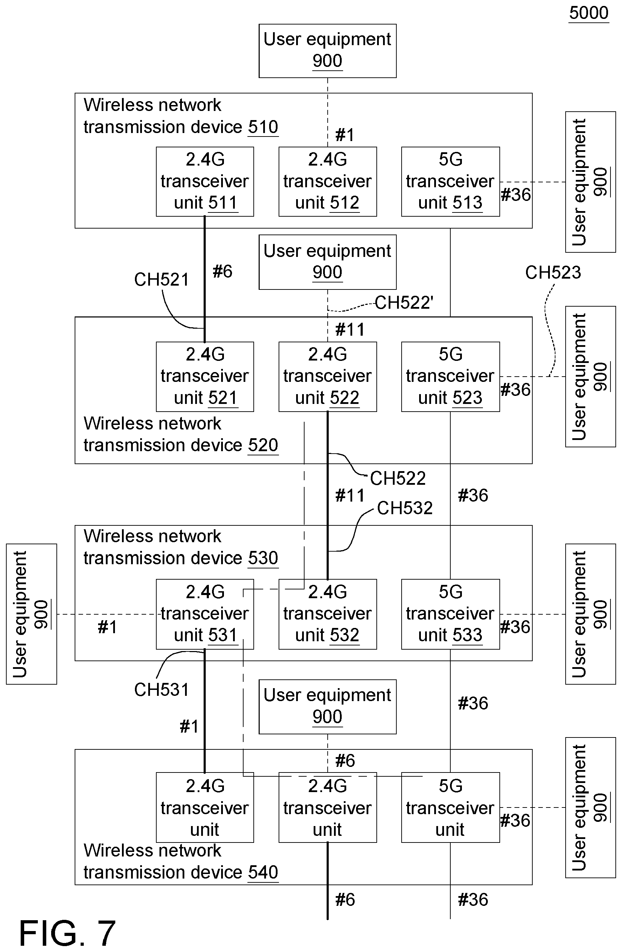

Please refer to FIG. 7, which shows a schematic diagram of a wireless network bridge system 5000 according to a fifth embodiment. The fifth embodiment of the wireless network bridge system 5000 uses both the hardware architecture and the software architecture to implement the present invention of technology.

The wireless network bridge system 5000 includes a plurality of wireless network transmission devices 510, 520, 530, 540, etc. The wireless network transmission device 510 is, for example, a gateway, the wireless network transmission devices 520, 530, 540, etc. are, for example, signal extenders. The wireless network transmission device 510 includes two 2.4G transceiver units 511, 512 and one 5G transceiver unit 513. The wireless network transmission device 520 includes two 2.4G transceiver units 521, 522 and one 5G transceiver unit 523. The wireless network transmission device 530 includes two 2.4G transceiver units 531, 532 and one 5G transceiver unit 533.

In the fifth embodiment, the main downlink channel CH522 of the wireless network transmission device 520 is different from the main uplink channel CH521 of the wireless network transmission device 520. In other words, the wireless network transmission device 520 mainly uses the 2.4G transceiver unit 521 to communicate with the previous wireless network transmission device 510, and mainly uses the 2.4G transceiver unit 522 to communicate with the next wireless network transmission device 530, without the problem of halving the transmission performance.

Similarly, the main downlink channel CH531 of the wireless network transmission device 530 is different from the main uplink channel CH532 of the wireless network transmission device 530. The wireless network transmission device 530 mainly uses the 2.4G transceiver unit 532 to communicate with the previous wireless network transmission device 520, and mainly uses the 2.4G transceiver unit 531 to communicate with the next wireless network transmission device 540, without the problem of halving the transmission performance.

Similarly, the wireless network transmission device 540 also uses different uplink channel and downlink channel.

In addition, the connection channels CH522', CH523 of the wireless network transmission device 520 connected to the user equipment 900 are different from the connection channels CH512, CH513 of the wireless network transmission device 510 connected to the user equipment 900, in order to avoid the signal interference problem.

Furthermore, in the fifth embodiment, the design of the primary channel and the secondary channel allows the packet to be transferred to another transceiver unit without the problem of halving the transmission performance.

According to the above embodiments, the present invention uses the alternate use of different transceiver units and channels to overcome the problem of halving the transmission performance and avoid the problem of signal interference.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A wireless network bridging method, **characterized in that** the wireless network bridging method comprises:
setting, by a first wireless network transmission device (110), a downlink channel (CH111) of the first wireless network transmission device (110), and setting, by the first wireless network transmission device (110), at least one connection channel (CH112) of the first wireless network transmission device (110) connected to at least one user equipment (900);
scanning, by a second wireless network transmission device (120), the first wireless network transmission device (110), and setting, by the second wireless network transmission device (120), an uplink channel (CH121) of the second wireless network transmission device (120);
transmitting, by the first wireless network transmission device (110), a channel information of the first wireless network transmission device (110) to the second wireless network transmission device (120);
setting, by the second wireless network transmission device (120), a downlink channel (CH122) of the second wireless network transmission device (120) according to the channel information of the first wireless network transmission device (110), wherein the downlink channel (CH122) and the uplink channel (CH121) of the second wireless network transmission device (120) are different; and
setting, by the second wireless network transmission device (120), at least one connection channel (CH123) of the second wireless network transmission device (120) connected to at least one user equipment (900) according to the channel information of the first wireless network transmission device (110), wherein the connection channel (CH123) of the second wireless network transmission device (120) and the connection channel (CH112) of the first wireless network transmission device (110) are different.

2. The wireless network bridging method according to claim 1, wherein the first wireless network transmission device is a gateway, and the second wireless network transmission device is a signal extender.

3. The wireless network bridging method according to claim 1, wherein the first wireless network transmission device and the second wireless network transmission device are signal extenders.

4. The wireless network bridging method according to claim 1, wherein
the first wireless network transmission device includes at least two 5G transceiver units and one 2.4G transceiver unit, at least one of the 5G transceiver units of the first wireless network transmission device provides the downlink channel of the first wireless network transmission device;
the second wireless network transmission device includes three 5G transceiver units and a one 2.4G transceiver unit, one of the 5G transceiver units of the second wireless network transmission device provides the uplink channel of the second wireless network transmission device, another one of the 5G transceiver units of the second wireless network transmission device provides the downlink channel of the second wireless network transmission device.

5. The wireless network bridging method according to claim 1, wherein
the first wireless network transmission device includes two 5G transceiver units and two 2.4G transceiver units, one of the 5G transceiver units of the first wireless network transmission device provides the downlink channel of the first wireless network transmission device;
the second wireless network transmission device includes two 5G transceiver units and two 2.4G transceiver units, one of the 5G transceiver units of the second wireless network transmission device provides the uplink channel of the second wireless network transmission device, one of the 2.4G transceiver units of the second wireless network transmission device provides the downlink channel of the second wireless network transmission device.

6. The wireless network bridging method according to claim 1, wherein
the first wireless network transmission device includes two 5G transceiver units and two 2.4G transceiver units, one of the 2.4G transceiver units of the first wireless network transmission device provides the downlink channel of the first wireless network transmission device;
the second wireless network transmission device includes two 5G transceiver units and two 2.4G transceiver units, one of the 2.4G transceiver units of the second wireless network transmission device provides the uplink channel of the second wireless network transmission device, one of the 5G transceiver units of the second wireless network transmission device provides the downlink channel of the second wireless network transmission device.

7. A wireless network bridging method, **characterized in that** the wireless network bridging method comprises:
setting, by a first wireless network transmission device (310), a main downlink channel (CH311) and a secondary downlink channel (CH312) of the first wireless network transmission device (310);
setting, by a second wireless network transmission device (320), a main uplink channel (CH321) and a secondary uplink channel (CH322) of the second wireless network transmission device (320); and
setting, by the second wireless network transmission device (320), a main downlink channel (CH322') and a secondary downlink channel (CH321') of the second wireless network transmission device (320), wherein the main downlink channel (CH322') and the main uplink channel (CH321) of the second wireless network transmission device (320) are different.

8. The wireless network bridging method according to claim 7, wherein the first wireless network transmission device is a gateway, and the second wireless network transmission device is a signal extender.

9. The wireless network bridging method according to claim 7, wherein the first wireless network transmission device and the second wireless network transmission device are signal extenders.

10. The wireless network bridging method according to claim 7, wherein
the first wireless network transmission device includes one 5G transceiver unit and one 2.4G transceiver unit, the 5G transceiver unit of the first wireless network transmission device provides the main downlink channel of the first wireless network transmission device;
the second wireless network transmission device includes one 5G transceiver unit and one 2.4G transceiver unit, the 5G transceiver unit of the second wireless network transmission device provides the main uplink channel of the second wireless network transmission device, the 2.4G transceiver unit of the second wireless network transmission device provides the main downlink channel of the second wireless network transmission device.

11. The wireless network bridging method according to claim 10, wherein
the 5G transceiver unit of the second wireless network transmission device transfers a unicast packet to the 2.4G transceiver unit of the second wireless network transmission device, so that the unicast packet is uploaded to the first wireless network transmission device through the secondary uplink channel of the second wireless network transmission device.

12. The wireless network bridging method according to claim 7, wherein
the first wireless network transmission device includes one 5G transceiver unit and one 2.4G transceiver unit, the 2.4G transceiver unit of the first wireless network transmission device provides the main downlink channel of the first wireless network transmission device;
the second wireless network transmission device includes one 5G transceiver unit and one 2.4G transceiver unit, the 2.4G transceiver unit of the second wireless network transmission device provides the main uplink channel of the second wireless network transmission device, the 5G transceiver unit of the second wireless network transmission device provides the main downlink channel of the second wireless network transmission device.

13. The wireless network bridging method according to claim 12, wherein
the 2.4G transceiver unit of the second wireless network transmission device transfers a unicast packet to the 5G transceiver unit of the second wireless network transmission device, so that the unicast packet is uploaded to the first wireless network transmission device through the secondary uplink channel of the second wireless network transmission device.

14. The wireless network bridging method according to claim 7, wherein
the first wireless network transmission device includes two 5G transceiver unit and one 2.4G transceiver unit, one of the 5G transceiver units of the first wireless network transmission device provides the main downlink channel of the first wireless network transmission device;
the second wireless network transmission device includes two 5G transceiver units and one 2.4G transceiver unit, one of the 5G transceiver units of the second wireless network transmission device provides the main uplink channel of the second wireless network transmission device, another one of the 5G transceiver units of the second wireless network transmission device provides the main downlink channel of the second wireless network transmission device.

15. The wireless network bridging method according to claim 7, wherein
the first wireless network transmission device includes one 5G transceiver unit and two 2.4G transceiver units, one of the 2.4G transceiver units of the first wireless network transmission device provides the main downlink channel of the first wireless network transmission device;
the second wireless network transmission device includes one 5G transceiver unit and two 2.4G transceiver units, one of the 2.4G transceiver units of the second wireless network transmission device provides the main uplink channel of the second wireless network transmission device, another one of the 2.4G transceiver units of the second wireless network transmission device provides the main downlink channel of the second wireless network transmission device.

16. A wireless network transmission device (120), **characterized in that** the wireless network transmission device comprises:
at least one 5G transceiver unit (121); and
at least one 2.4G transceiver unit (123), wherein one of the at least one 5G transceiver unit (121) and the at least one 2.4G transceiver unit (123) provides an uplink channel (CH121), another one of the at least one 5G transceiver unit (121) and the at least one 2.4G transceiver unit (123) provides a downlink channel (CH122), and the downlink channel (CH122) is different from the uplink channel (CH121).

17. The wireless network transmission device according to claim 16, wherein the wireless network transmission device is a gateway.

18. The wireless network transmission device according to claim 16, wherein the wireless network transmission device is a signal extender.

19. The wireless network transmission device according to claim 16, wherein a quantity of the at least one 5G transceiver unit is larger than or equal to two, the 5G transceiver units provide the uplink channel and the downlink channel.

20. The wireless network transmission device according to claim 16, wherein one of the at least one 5G transceiver unit provides the uplink channel, and one of the at least one 2.4G transceiver unit provides the downlink channel.
